# EUROPEAN PATENT APPLICATION

(11) **EP 1 475 661 A1**
(43) Date of publication of application: **10.11.2004**
(21) Application number: 04252605.3
(22) Date of filing: 05.05.2004
(51) Int. Cl.: G03B 17/24

(54) **Optical data recording device**

(30) Priority: 07.05.2003 JP 2003129468; 22.09.2003 JP 2003330531
(71) Applicant: Fuji Photo Film Co., Ltd., Kanagawa-ken (JP)
(72) Inventor: Moriya, Mitsuhiro, Minami-Ashigara-shi Kanagawa (JP)
(74) Representative: Stevens, Jason Paul

(57) **Abstract**

An optical data recording device has a data recording aperture (23d) on the right hand side of a sprocket (43) in a position opposing to a topside margin of a picture frame taking area (22c) of photographic film (22a) as positioned behind an exposure opening (23c). A light guide (41) is disposed along a top side of the image tunnel (36), to produce a data recording light path toward the data recording aperture (23d). At the flash photography, the flash light is partly conducted through a light conducting device (40) toward the data recording light path, so as to record a bit mark (22d) on photographic film (22a) by use of the flash light. At the photography without flash, external light is taken into the data recording light path, to record a bit mark (22d) by use of the external light.

## Description

### FIELD OF THE INVENTION

The present invention relates to an optical data recording device for recording data, such as bit marks, optically on photographic film in association with photographed picture frames, and a lens-fitted photo film unit which has the optical data recording device incorporated therein.

### BACKGROUND OF THE INVENTION

Lens-fitted photo film units are known as a kind of single-use handy camera that makes it easy for anyone to take photographs. The lens-fitted photo film unit is constituted of a main body portion that is loaded with photographic film and provided with simple photographic mechanism, and front and rear cover portions that cover the main body portion from the front and rear sides thereof.

In a center area of the main body portion is disposed an image tunnel that defines a photographic light path. On the left side of the image tunnel is disposed a film cartridge chamber. A film roll chamber is disposed on the right side of the image tunnel as viewed from the front. Above the image tunnel are disposed a viewfinder, a film feeding mechanism, and a shutter mechanism. A battery for charging a flash unit is disposed below the image tunnel.

There have been developed a variety of lens-fitted photo film units, including those models which have an optical data recording device. The optical data recording device optically records print instruction data on photographic film at the time of exposure, for example, as disclosed in Japanese Laid-open Patent Application No. 2000-162746.

For example, these data are optically recorded as bit marks, and designate printing size, print color, such as sepia or black-white printing, or designate pseudo zooming print or cropping wherein a center portion of a picture frame is printed at a larger magnification to produce a picture that looks like being zoomed in.

The optical data recording device is constituted of an optical recording light source, a data recording aperture that is opposed to the photographic film and projects light toward the photographic film, a data recording light path that conducts light from the optical recording light source to the data recording aperture, and a light shielding member for blocking the data recording light path.

In the lens-fitted photo film unit of the above prior art, the data recording aperture is disposed below the image tunnel. It is usual in the lens-fitted photo film units that the room provided below the image tunnel is used for holding batteries and a main capacitor, and the data recording aperture is disposed on the back side of the holding room. As a light source for the optical data recording, a specific LED is used, and the LED is mounted on the back side of a flash circuit board.

Since the lens-fitted photo film unit of the above Patent Document has the data recording aperture below the image tunnel, light shielding members for the data recording light path have complicate structures.

As described above, because a battery or the like is disposed in a room below the image tunnel, the data recording light path cannot extend through this room. In order to detour this holding room, the data recording light path have to be bent in a complicated manner. So the light shielding members for data recording light path have complicate structures.

As the structures of the light shielding members are complicated, the number of parts increases, and the efficiency of assembling the film unit body is lowered. As the result, the size of the film unit increases, and the cost of manufacture raises. Because the flash unit is to be mounted with the LED for optical data recording, the flash unit must have been developed as a specific model that differs from standard models having no optical data recording function.

Because standard type compact cameras need less manufacture lots, the merit of mass production is less than that for the handy cameras, including the lens-fitted photo film unit. Therefore, developing specific flash units with different sizes and designs for different camera models will not result a remarkable increase in manufacturing cost.

On the contrary, handy cameras need a large manufacture lots, so that the merit of mass production is remarkable. Thus, using common flash unit will bring a huge reduction in cost. It means that the need for developing specific flash units according to the models of the lens-fitted photo film units has been a great obstacle to the cost reduction.

Japanese Laid-open Patent Application No. Hei 8-211478 suggests recording data optically on photographic film by use of external light. The external light is taken into a camera body through a front window, and is conducted through a light guide, which is made of a transparent plastic, onto the photographic film, in response to a shutter release operation. If the external light does not have a sufficient brightness for the data recording, this prior art cannot record the data without failure.

To solve this problem, Japanese Laid-open Patent Application No. 2001-242594 suggests making use of flash light for the data recording on photographic film at the flash photography. In this prior art, a light conducting member is exposed to a front portion of the body. The light conducting member is made of a transparent plastic resin, and lets the external light into a data recording light path that extends in the body, in order to use the external light for the data recording at photography without flash. At the flash photography, on the other hand, the light conducting member conducts a part of the flash light into the data recording light path, to use it for the data recording.

Japanese Laid-open Patent Application No. 2000-47316 suggests coloring such a light conducting member in order to record the data or marks more obviously.

However, the lens-fitted photo film unit disclosed in the above mentioned Japanese Laid-open Patent Application No. Hei 8-211478 still has a disadvantage. That is, because the external light is taken through the light conducting member at the photography without flash, the amount of light can be insufficient for the data recording.

### SUMMARY OF THE INVENTION

A primary object of the present invention is to provide an optical data recording device that can be incorporated into a handy camera without the need for enlarging the camera body, wherein handy camera includes a lens-fitted photo film unit.

Another object of the present invention is to provide an optical data recording device that can be incorporated into a handy camera while keeping the manufacturing cost of the camera in a low level.

The present invention also has an object to provide a lens-fitted photo film unit having such an optical data recording device incorporated therein.

The present invention further has an object to provide a handy camera with an optical data recording device that can take in a sufficient amount of external light for the data recording at the photography without flash.

The present invention achieves the above and other objects in an optical data recording device used in a handy camera having a main body portion, in which a sprocket of a film feeding mechanism is disposed above an image tunnel that forms a photographic light path from a photographic lens to an exposure opening, by comprising a data recording light source; a data recording aperture formed through the main body portion above the exposure opening; and a device for letting light from the data recording light source be projected toward the data recording aperture in synchronism with a shutter release operation.

According to a preferred embodiment of the invention, the data recording light path is at least partly disposed in an internal upper portion of the image tunnel, wherein light from the data recording light source enters through a data aperture formed through a front side of the image tunnel into the data recording light path, and wherein the light shielding member is disposed inside the image tunnel.

According to another preferred embodiment, the data recording light path is disposed between a top side of the image tunnel and a viewfinder holding frame that is mounted above said image tunnel, and wherein said topside of said image tunnel constitutes said light shielding member.

The present invention further provides a camera having a flash device and an optical data recording device incorporated therein, wherein the camera comprises a data recording aperture formed above an exposure opening that defines the picture frame taking area; a data recording light path for conducting external light that is taken in through an outward window of the camera toward the data recording aperture; an externally operable member for turning the flash device ON and OFF ; a light conducting device having a light inlet portion for introducing a part of flash light from a flash emitting portion of the flash device, and a light outlet portion for projecting the light, the light outlet portion being movable between a conductive position inserted in the data recording light path so as to conduct the part of flash light to the data recording light path, and a non-conductive position retracted from the data recording light path; a device for interconnecting the light outlet portion to the externally operable member such that the light outlet portion moves to the conductive position as the flash device is turned ON, or to the non-conductive position as the flash device is turned OFF; and a device for letting the external light or the part of flash light be projected toward the data recording aperture in synchronism with a shutter release operation.

According to a preferred embodiment of the camera of the present invention, the light conducting device comprises a plurality of light guide members connected in cascade along the light conducting direction, and the most downstream one of the light guide members constitutes the movable light outlet portion.

According to another preferred embodiment, the light conducting device is constituted of at least an optical fiber.

Because the data recording aperture is formed above the image tunnel, a data recording light path from a data recording light source to the data recording aperture may be disposed above the photographic light path, so it is possible to simplify the shape of a light shielding member for shielding the data recording light path and the photographic light path from each other.

Because the light outlet portion of the light conducting device is retracted from the data recording light path while the flash photography is not selected, the external light can reach the data recording aperture without being reduced.

### BRIEF DESCRIPTION OF THE DRAWINGS

The foregoing and other features and advantages of the present invention will be described below in detail with reference to the accompanying drawings, in which like elements are designated by like reference numerals, and wherein;
Figure 1 is a perspective view illustrating an outer appearance of a lens-fitted photo film unit according to a first embodiment of the present invention;
Figures 2A, 2B and 3B are explanatory diagrams illustrating operating positions of an operation member for switching photography modes;
Figure 3 is an exploded perspective view illustrating the lens-fitted photo film unit according to the first embodiment of the present invention;
Figure 4 is an explanatory diagram illustrating an optical data recording mechanism according to the first embodiment;
Figure 5 is a sectional view of an image tunnel of the lens-fitted photo film unit;
Figures 6A and 6B are explanatory diagrams illustrating cooperation between a masking blade and the operation member;
Figure 7 is an exploded perspective view of a mode switching mechanism;
Figure 8 is an explanatory diagram illustrating another embodiment where a data recording light path is disposed on a top wall of an image tunnel.
Figure 9 is an explanatory diagram of an embodiment where an LED serves as a data recording light source;
Figure 10 is a circuit diagram of a flash circuit;
Figure 11 is an explanatory diagram illustrating contact members that constitute a switch for the LED of Fig.9;
Figure 12 is a perspective view illustrating an appearance of a lens-fitted photo film unit in a condition where the flash photography is not selected, and the pseudo zooming print is not designated;
Figure 13 is a similar view to Fig. 12, but illustrating a condition where the flash photography is selected, and the pseudo zooming print is designated;
Figures 14A, 14B, 14C and 14D are explanatory diagrams illustrating respective printing processes to be designated by bit marks;
Figure 15 is an exploded perspective view of the lens-fitted photo film unit according to the embodiment shown Fig.12;
Figure 16 is an exploded perspective view illustrating essential elements of a viewfinder field changing mechanism and an optical data recording mechanism;
Figure 17 is a sectional view of an image tunnel of the embodiment of Fig. 12, illustrating essential elements to this embodiment;
Figure 18 is an explanatory diagram illustrating where the bit marks are recorded on photographic film;
Figure 19 is an explanatory diagram illustrating the viewfinder field changing mechanism and the optical data recording mechanism, as viewed from the front, in the condition where the pseudo zooming print is not designated and the flash photography is not selected;
Figure 20 is an explanatory diagram illustrating the viewfinder field changing mechanism and the optical data recording mechanism, as viewed from the front, in the condition where the pseudo zooming print is designated but the flash photography is not selected;
Figure 21 is an explanatory diagram illustrating the viewfinder field changing mechanism and the optical data recording mechanism, as viewed from the front, in a condition where the pseudo zooming print is not designated but the flash photography is selected;
Figure 22 is an explanatory diagram illustrating the viewfinder field changing mechanism and the optical data recording mechanism, as viewed from the front, in a condition where the pseudo zooming print is designated and the flash photography is selected;
Figure 23 is a perspective view illustrating essential elements to a modification to the optical data recording mechanism of Fig. 16, wherein an optical fiber is used as a flash light conducting member.

### DESCRIPTION OF THE PREFERRED EMBODIMENTS

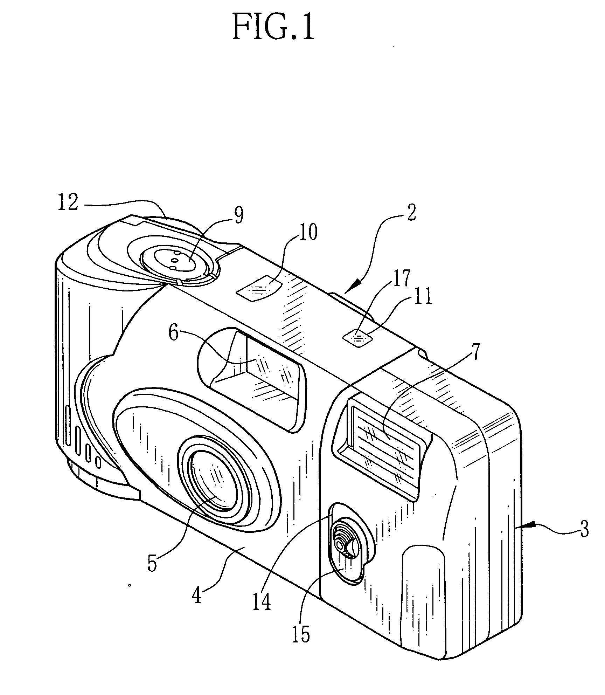

A lens-fitted photo film unit 2 shown in Fig. 1 constitutes a film unit body 3 with a photographic mechanism mounted therein, a photo film cartridge loaded in the film unit body 3 during manufacture, and a label 4 securely put around the film unit body 3. The label 4 is formed with openings for exposing necessary parts of the film unit body 3. The film unit body 3 has on its front side a photographic lens 5, a viewfinder 6, a flash emitting portion 7, and a mode selection button 15 that is used for choosing a photography mode.

The film unit body 3 has on its top side a shutter button 9, an exposure counter window 10, a signal opening 11 and so on.

From a back side of the film unit body 3 is exposed a portion of a film winding knob 12 that is used for film-winding after exposure. A main portion of the mode selection button 15 is exposed through an operation opening 14 that is formed through the front side the film unit body 3.

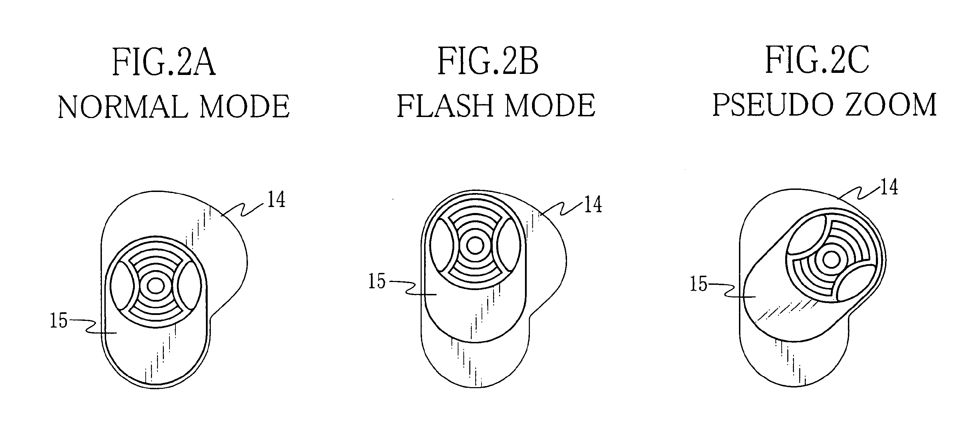

As shown in Fig.2, the mode selection button 15 is movable between a first operating position (Fig.2A) below the operation opening 14, a second operating position (Fig.2B) where the mode selection button 15 slides upward from the first operating position, and a third operating position (Fig. 2C) where the mode selection button 15 turns clockwise from the second operating position in the drawing.

The lens-fitted photo film unit 2 is set to a standard photography mode as the mode selection button 15 being set to the first operating position.

The lens-fitted photo film unit 2 is set to a flash-on mode as the mode selection button 15 is set to the second operating position.

The lens-fitted photo film unit 2 is set to a pseudo zooming mode as the mode selection button 15 is set to the third operating position. In the pseudo zooming mode, the lens-fitted photo film unit 2 optically records pseudo zooming data on the photographic film to designate printing a fragment of an exposed frame at a larger magnification, wherein the pseudo zooming data consist of bit marks.

The pseudo zooming data consist of those bit marks which are substantially rectangular in shape. Whether there are such bit marks or not is determined by photo-printers, so that those frames having bit marks recorded in association are printed after being image-processed for the pseudo zooming.

The lens-fitted photo film unit 2 turns its flash unit on in the pseudo zooming mode because flash light is used as a data recording light source for recording pseudo zooming data.

In the flash-on mode and the pseudo zooming mode, the lens-fitted photo film unit 2 sticks a signaling member 17 out of its top side. The signaling member 17 is a light guide made of transparent plastics, and guides light from a light emitting element to outside the film unit body 3. The light emitting element starts emitting light when the flash unit is fully charged, so that the signaling member 17 indicates that the flash unit is ready for flashing.

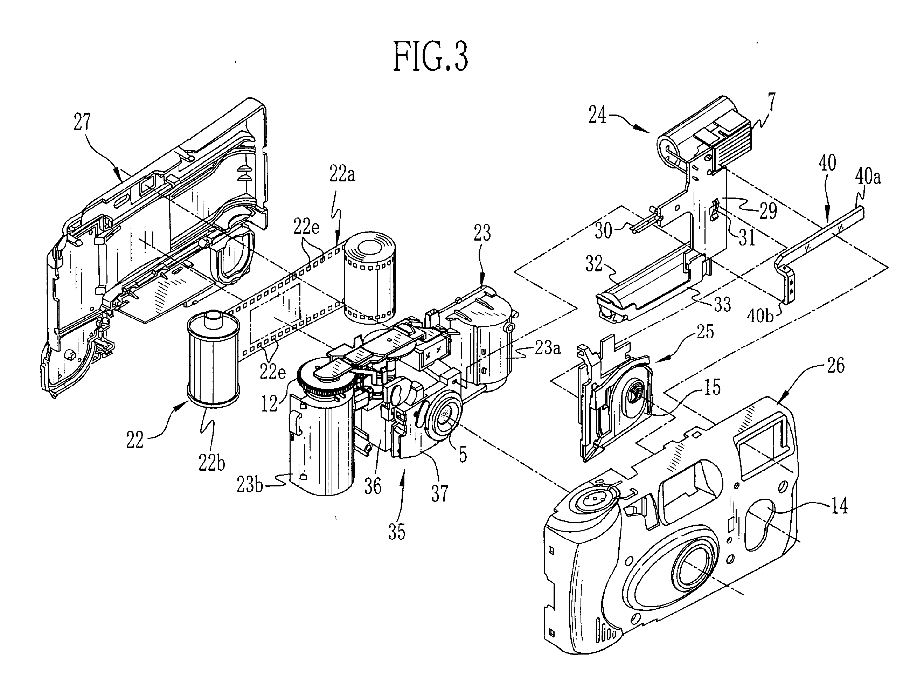

Fig.3 shows an exploded perspective view of the film unit body 3.

The film unit body 3 consists of a main body portion 23, a flash unit 24 that is attached to the front side of the main body portion 23, a mode switching mechanism 25 for switching photography modes, a front cover portion 26 and a rear cover portion 27 covering front and back sides of the main body portion 23.

The main body portion 23 is loaded with an ISO 135 type photo film cartridge 22. The photo film cartridge 22 consists of a strip of photographic film 22a, and a cartridge shell 22b containing the photographic film 22a, and is loaded from the back side into the main body portion 23 after the photographic film 22a being drawn out from the cartridge shell 22b and wound in a roll. As well-known, perforations 22e are formed along side edges of the photographic film 22, for the sake of film feeding.

The flash unit 24 consists of a printed circuit board 29 having a flash circuit formed thereon, and a flash emitting portion 7 that includes a flash discharge tube, a reflector and a diffusion plate. On the printed circuit board 29 are mounted also a synch-switch 30 that is turned on in synchronism with a shutter-release operation to effect a flash of light emission, a metal contact strip 31 that constitutes a charge switch and is turned on and off by the mode selection button 15, and a battery contact strip 33 for connecting a battery 32 to the flash circuit. This flash unit 24 is of a type that is used commonly in standard type lens-fitted photo film units having no optical data recording function. The use of this common part is for the cost reduction. Because the effect of mass-production is bigger with handy cameras than with compact cameras, the bigger cost reduction is achieved by using as much common parts as possible.

Although the present embodiment uses such a standard model flash unit without any modification, there may be some case where it is hard to use the standard model flash unit without any change, for example, because of a difference in shape of mounting space. In that case, it is preferable not to change the circuit board itself, but to modify those elements which are mounted on the circuit board, such as the synch-switch, because the change of the circuit board raises the cost.

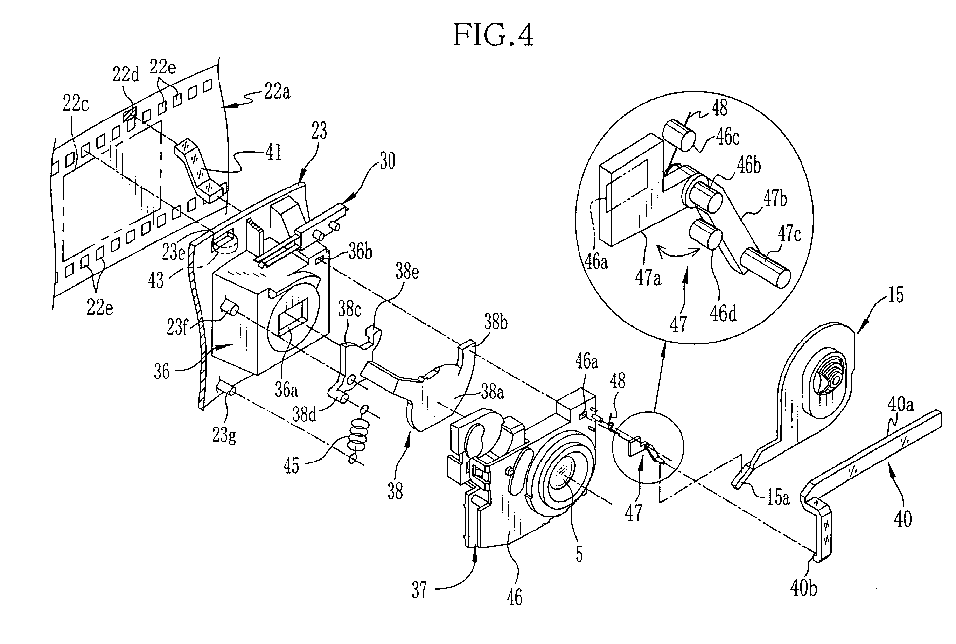

The main body portion 23 is provided at its front center portion with an exposure section 35. The exposure section 35 has an image tunnel 36 as a base frame of a tubular shape that provides a light path of photographic light entering through the photographic lens 5. Above the image tunnel 36 are disposed a shutter mechanism, a film winding mechanism, and a viewfinder 6. Forward of the image tunnel 36 are disposed a shutter blade 38, see Fig.4, and a lens holder 37. On the right hand side of the exposure section 35 as viewed from the front, there is a film roll chamber 23a for holding the film roll, whereas a cartridge chamber 23b for holding the cartridge shell 22b is formed on the left hand side of the exposure section 35.

Designated by 40 is a first light guide that is used for conducting the flash light to the front of the exposure section 35, for the sake of recording the bit marks on the photographic film 22a. The first light guide 40 is made of transparent plastics, and has a light inlet portion 40a and a light outlet portion 40b. The light inlet portion 40a is disposed lower front side of the flash emitting portion 7, whereas the light outlet portion 40b projects light that is taken through the light inlet portion 40a.

As shown in Fig. 4, the image tunnel 36 has a shutter aperture 36a and a data aperture 36b formed through its front side.

Light from a photographic subject taken through the photographic lens 5 enters through the shutter aperture 36a into the image tunnel 36, and is projected onto a picture frame taking area 22c of the photographic film 22a.

On the other hand, the data recording light conducted through the first light guide 40 enters through the data aperture 36b into the image tunnel 36, and is projected onto a data recording area 22d of the photographic film 22a. The data recording area 22d is located along a marginal portion of the photographic film 22a, which extends above the perforations 22e along the top side of the picture frame taking areas 22c, in the posture where the photographic film 22a is loaded in the lens-fitted photo film unit 2.

On top of the image tunnel 36, on the left hand side as viewed from the front, there is disposed a sprocket 43 that is a member of a film feeding mechanism. In order to engage the sprocket 4 with the perforations of the photographic film 22a, the sprocket 43 partly protrudes rearwards through an opening 23e that is formed through the main body portion 23. A room below the image tunnel 36 holds the battery 32.

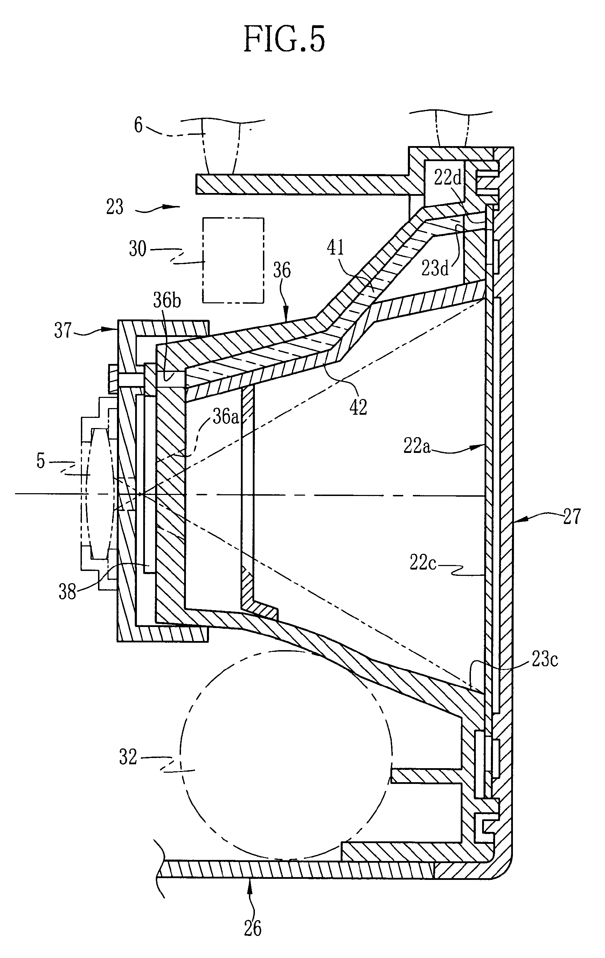

As shown in Fig. 5, the main body portion 23 has an exposure opening 23c and a data recording aperture 23d formed through its back side. The exposure opening 23c is opposed to the picture frame taking area 22c, whereas the data recording aperture 23d is opposed to the data recording area 22d. The data recording light is projected through the data recording aperture 23d. The data recording aperture 23d has a substantially rectangular shape to record the bit marks in that shape. Inside the image tunnel 36, above the photographic light path from the shutter aperture 36a to the exposure opening 23c, is disposed a second light guide 41.

The second light guide 41 is made of transparent plastics, and constitutes a data recording light path that conducts the data recording light from the data aperture 36b through the image tunnel 36 to the data recording aperture 23d. Designated by 42 is a light block wall that blocks the data recording light path from the photographic light path. The light black wall 42 blocks the data recording light as traveling along the data recording light path from leaking into the photographic light path.

The data recording aperture 23d is located on the right hand side of the sprocket 43 so as not to interfere with the sprocket 43. Because the data recording light path is disposed on the front side of the data recording aperture 23d, the top wall of the image tunnel 36 swells up largely. In conventional lens-fitted photo film units, an open space is provided between the viewfinder and the top wall of the image tunnel. The space that has conventionally been an open space is utilized to accept the swell of the image tunnel 36.

Since the data recording aperture 23d is disposed above the image tunnel 36 and thus the conventionally useless space is used for disposing the data recording light path, the size of the film unit body will not increase.

Since the data recording light path is located inside the image tunnel 36 adjacent to the top wall of the image tunnel 36, the top wall of the image tunnel 36 serves also as a light shielding member for the data recording light path. In this way, structure of light shielding members for the data recording light path is simplified.

Since the data recording aperture 23 is located above the image tunnel 36, the distance between the data recording light source (flash emitting portion) and the data recording aperture is shorter than conventional. So it is easier to produce a light path from the light source to the data recording aperture.

On the front side of the image tunnel 36 is mounted a shutter blade 38 that is used for opening or closing the shutter aperture 36a and the data aperture 36b as well. A lens holder 37 is mounted in front of the shutter blade 38. One side of the image tunnel 36 is provided with a pivot pin 23f that pivotally supports the shutter blade 38, and a pin 23g to hang one end of a spring 45 thereon.

The shutter blade 38 consists of a photographic shutter portion 38a to open or close the shutter aperture 36a, a data shutter portion 38b to open or close the data aperture 36b, and a mounting portion 38c formed with a hole for the pivot pin 23f. The mounting portion 38c is provided with a pin 38d to hang the other end of the spring 45 thereon, and a protrusion 38e that is used for activating the synch-switch 30. The shutter blade 38 is held in a closing position by an urging force of the spring 45, where the shutter blade 38 closes the shutter aperture 36a and data aperture 36b.

When a not-shown shutter drive lever strikes the shutter blade 38 at an upper end of the mounting portion 38c, the shutter blade 38 swings against the urging force of the spring 45 in a direction to open both the shutter aperture 36a and the data aperture 36b. After fully opening these apertures 36a and 36b, the shutter blade 38 returns to the closing position according to the urging force of the spring 45. As the shutter blade 38 swings toward the opening position, the protrusion 38e strikes one of a pair of contact strips of the synch-switch 30, to bring it into contact with the other contact strip. Then the synch-switch 30 turns ON to cause a flash light emission.

The lens holder 37 is an assembly having the photographic lens 5, a stop member and other members, which are mounted on a shutter cover 46. The shutter cover 46 covers up the shutter blade 38 and the front side of the image tunnel 36. The shutter cover 46 is formed with an aperture 46a in a position corresponding to the data aperture 36b. The aperture 46a is opened or closed by a light blocking blade 47. The light blocking blade 47 is movable into and out of the data recording light path. Unless the pseudo zooming mode is chosen, the light blocking blade 47 is placed in the data recording light path between the aperture 46a and the light outlet portion 40b of the first light guide 40, so as to stop entrance of the light from the light outlet portion 40b into the data aperture 36b.

The light blocking blade 47 is held at its arm portion 47b on a pivot pin 46b and is able to swing about the pin 46b between a position where a masking portion 47a is out of the data recording light path to open the aperture 46a, on one hand, and a closing position where the masking portion 47a is in the data recording light path to close the aperture 46a. The light blocking blade 47 is urged toward the closing position, for example, by a coiled spring 48. One end of the coiled spring 48 is hung on a pin 46c that is formed on the shutter cover 46, and the other end is hung on a not-shown pin that is formed on the light blocking blade 47.

A pin designated by 46d is a stopper for limiting the swinging range of the light blocking blade 47 so as to stop at the closing position.

The light blocking blade 47 swings in cooperation with the mode selection button 15. A driver pin 47c is formed on a lower end of the arm portion 47b, so that a pushing lever 15a of the mode selection button 15 comes into contact with the driver pin 47c to cause the light blocking blade 47 to swing.

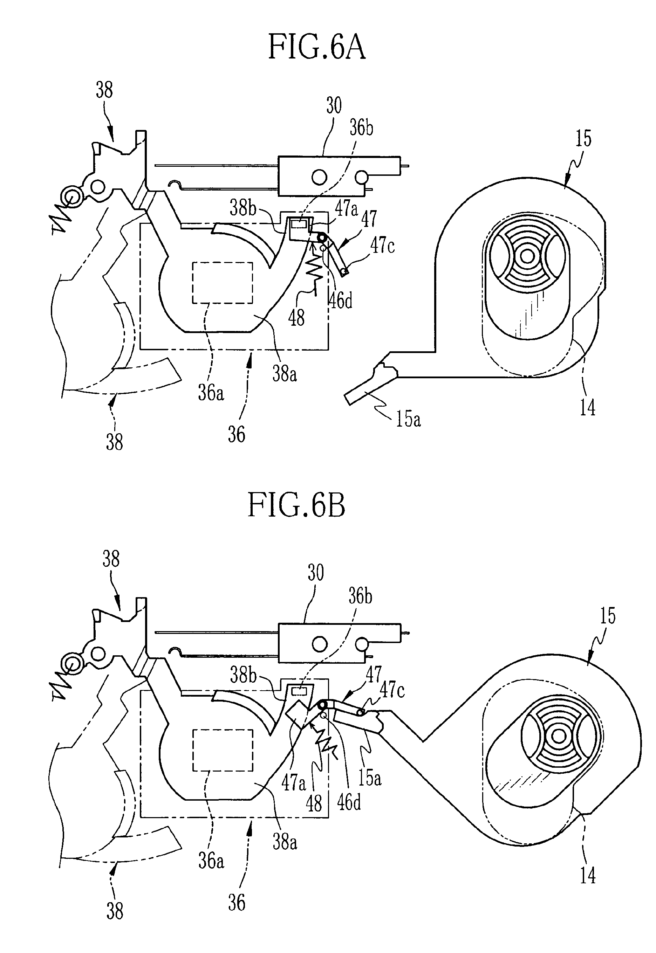

As shown in Fig.6A, where the mode selection button 15 is in the second operating position, the pushing lever 15a has no contact with the driver pin 47c, so the light blocking blade 47 is held in data recording light path according to the urging force of the coiled spring 48. It is to be noted that the same applies to the first operation position of the mode selection button 15. Even when the shutter blade 38 moves to open the data aperture 36b, while the light blocking blade 47 blocks the data recording light path, any light would not enter the data aperture 36b.

On the other hand, as shown in Fig.6B, while the mode selection button 15 is in the third operating position, the pushing lever 15a is in contact with the driver pin 47c and pushes up the driver pin 47c. Thereby the light blocking blade 47 swings in the counterclockwise direction in the drawing against the urging force of the spring 48, moving out of the data recording light path. When the shutter blade 38 opens the data aperture 36b, light from the light outlet portion 40b goes through the data aperture 36b, thereby to execute the optical data recording.

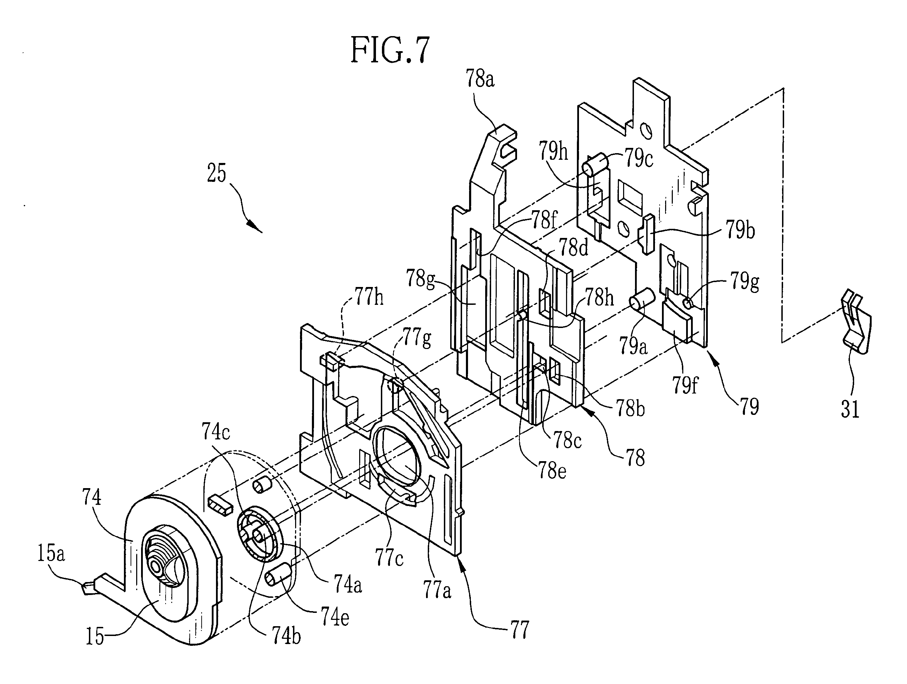

Fig.7 shows an exploded perspective view of the mode switching mechanism 25. The mode switching mechanism 25 consists of the mode selection button 15, a bearing plate 77, a sliding blade 78, and a holding plate 79.

The mode selection button 15 includes a switching plate 74 that has on its back side an annular rotary guide 74a, two slider pins 74b and 74c for holding the sliding blade 78 to slide, and a guide pin 74e for guiding the mode selection button 15. The slider pins 74b and 74c are located inside the rotary guide 74a. The bearing plate 77 is formed with a bearing opening 77a for accepting the rotary guide 74a of the mode selection button 15, and an opening 77c for accepting the guide pin 74e.

The bearing plate 77 slides up and down in cooperation with the movement of the mode selection button 15 between the first operating position and the second operating position. While the mode selection button 15 is rotating between the second operating position and the third operating position, the bearing plate 77 stands still and pivotally supports the rotating mode selection button 15. The bearing plate 77 has its back side a slider pin 77g for a sliding blade 78, and a pushing protuberance 77h for pushing the metal contact strip 31 of a charge switch that is mounted on the circuit board 29 of the flash unit 24.

The sliding blade 78 is provided with an engaging portion 78a that engages with the signaling member 17. The sliding blade 78 is provided with two openings 78b and 78c, an opening 78d, two slots 78e and 78c, and an opening 78g. The openings 78b and 78c accept the slider pins 74b and 74c respectively, and the opening 78d accepts the slider pin 77g of the bearing plate 77. The slot 78e accepts a guide pin 79b and an engaging protuberance 79b of the holding plate 79, whereas the slot 78f accepts a guide pin 79c of the holding plate 79. The opening 78g accepts the pushing protuberance 77h of the bearing plate 77. The slot 78e has a protuberance 78h inside, that engages with the engaging protuberance 79b of the holding plate 79.

The sliding blade 78 slides up and down as being pushed by the slider pin 74b of the mode selection button 15 and the slider pin 77g of the bearing plate 77, while the mode selection button 15 is moving between the first operating position and the second operating position. While the mode selection button 15 is rotating between the second operating position and the third operating position, the slider pin 74c of the mode selection button 15, that is remote from the pivotal center, pushes the sliding blade 78 to slide the sliding blade 78 farther. The holding plate 79 is provided with the guide pin 79a and 79c, the engaging protuberance79b, a stopper rib 79f and a stopper pin 79g. The guide pin 74e of the mode selection button 15 comes into contact with the stopper rib 79f and the stopper pin 79g. The holding plate 79 also has an opening 79h that accepts the pushing protuberance 77h of the bearing plate 77. The opening 79h is formed in opposition to the metal contact strip 31 of the charge switch of the flash unit 24.

The holding plate 79 is mounted on the front side of the printed circuit board 29 of the flash unit 24, so as to guide the sliding blade 78, the bearing plate 77, and the mode selection button 15 by virtue of the guide pins 79a and 79c and the engaging protuberance 79b. The stopper rib 79f of the holding plate 79 stops the mode selection button 15 from rotating farther from the first operating position, and also from sliding downward from the third operating position, as the guide pin 74e of the mode selection button 15 comes into contact with the stopper rib 79f. The stopper pin 79g of the holding plate 79 is in contact with the guide pin 74e while the mode selection button 15 is in the second operating position, so the mode selection button 15 will not move easily to the third operating position.

While the mode selection button 15 is in the first operating position (Fig. 2A) , the metal contact strip 31 is out of contact with the pushing protuberance 77h, so the flash unit is not charged. Therefore, in the first operating position, the flash does not work even when the synch-switch 30 turns ON in response to a shutter release operation. Also in the first operating position, the pushing lever 15a of the mode selection button 15 is out of contact with the driver pin 47c of the light blocking blade 47, so the light blocking blade 47 is inserted between the aperture 46a and the light outlet portion 40b to block the data recording light path. Therefore, even when the data aperture 36b is opened in response to a shutter release operation, any bit marks will not be recorded on the data recording area 22d.

While the mode selection button 15 is in the second operating position (Fig.2B), the metal contact strip 31 is in contact with the pushing protuberance 77h, so the charge switch is turned on, thereby to start charging the flash unit. Therefore, in the second operating position, the flash works when the synch-switch 30 turns ON in response to a shutter release operation. On the other hand, since the pushing lever 15a of the mode selection button 15 is out of contact with the driver pin 47c of the light blocking blade 47 in this second operating position, like in the first operating position, the light blocking blade 47 still blocks the data recording light path. Therefore, even though the flash light is guided through the first light guide 40 and is projected from the light outlet portion 40b, the flash light will not go through the data aperture 36b, so that any bit marks will be recorded.

When the mode selection button 15 is in the third operating position, the charge switch turns on, in the same way as in the second operating position, so the flash works in synchronism with a shutter release operation.

In the third operating position (Fig.2C) , the pushing lever 15a pushes up the driver pin 47c of the light blocking blade 47, to move the light blocking blade 47 out of the data recording light path. Therefore, in response to a shutter release operation, the flash light is projected from the light outlet portion 40b and goes through the data aperture 36b, recording bit marks on the data recording area 22d.

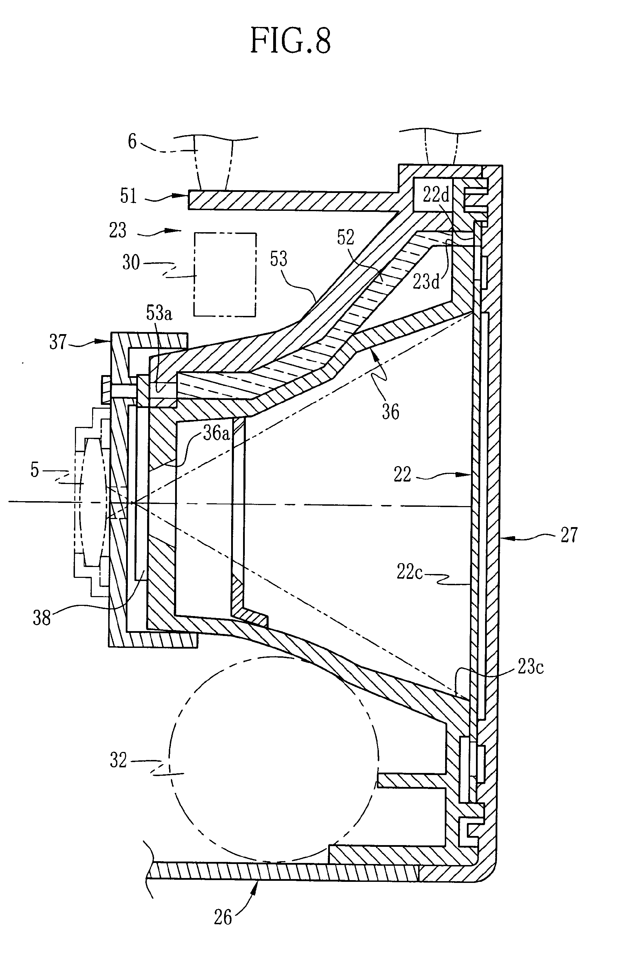

In the above embodiment, the second light guide that constitutes a portion of the data recording light path is placed inside the image tunnel 36. But it is possible to place such a second light guide between the top side wall of the image tunnel 36 and a viewfinder holding frame 51, as shown in Fig.8. The second light guide 52 is disposed along the top side wall of the image tunnel 36 in this example. In addition, a light shielding member 53 is formed below the viewfinder holding frame 51, so as to shield the second light guide 52 and thus the data recording light path in a light-tight fashion. The light shielding member 83 is formed with a data recording aperture 83a for the flash light to go through. It is of course possible to form a light shielding member as an independent member separately from the viewfinder holding frame.

As described so far, in the lens-fitted photo film unit having the optical recording device of the present invention incorporated therein, because the data recording aperture for recording the bit mark is formed above the image tunnel, it possible to dispose the data recording light path in the conventionally unused space between the viewfinder and the image tunnel. Thereby the light shielding member for the data recording light path is simplified in structure, which contributes to restricting an increase in manufacturing cost as well as an increase in body size.

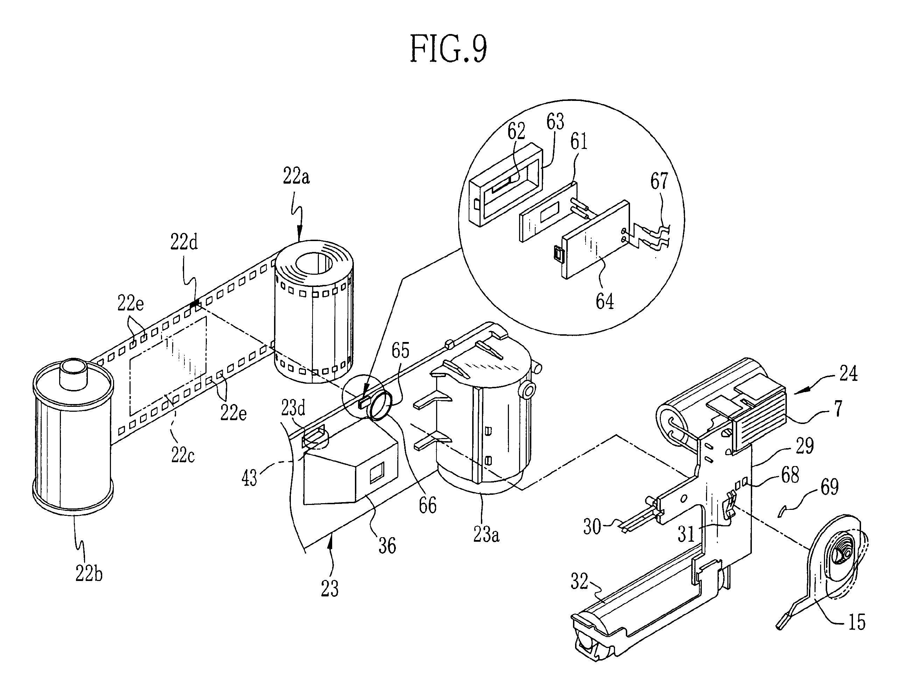

Although the above embodiment makes use of the flash device as a light source for the data recording, it is possible to use a specific data recording light source. An example of a specific data recording light source is an LED chip 61, as shown in Fig.9. The LED chip 61, having a light emitting member embedded directly in a circuit board, is small and compact as compared to an LED with lead wires. So it is easier to mount on a limited small position. But it is of course possible to use an LED with lead wires.

The LED chip 61 is placed in front of a data recording aperture 62 that is formed through a main body portion 23. The data recording aperture 62 is enclosed by a light-shielding rim 63, and the LED chip 91 is put in the rim 63. Thereafter, a cover 64 is put on the rim 63 to close in a light-tight fashion. Thus, light from the LED chip 91 does not leak out.

In this embodiment, a battery 65 is used as a specific power source for the LED chip 61. As the LED chip 61 needs a voltage of 3V or so to emit light, a button-type battery of 3V is used as the battery 65 in this example. The battery 65 is held in a battery holder 66 that is formed on the main body portion 23. Since the lens-fitted photo film unit expects the LED chip to emit light at most 50 times, the capacitance of the LED may be small.

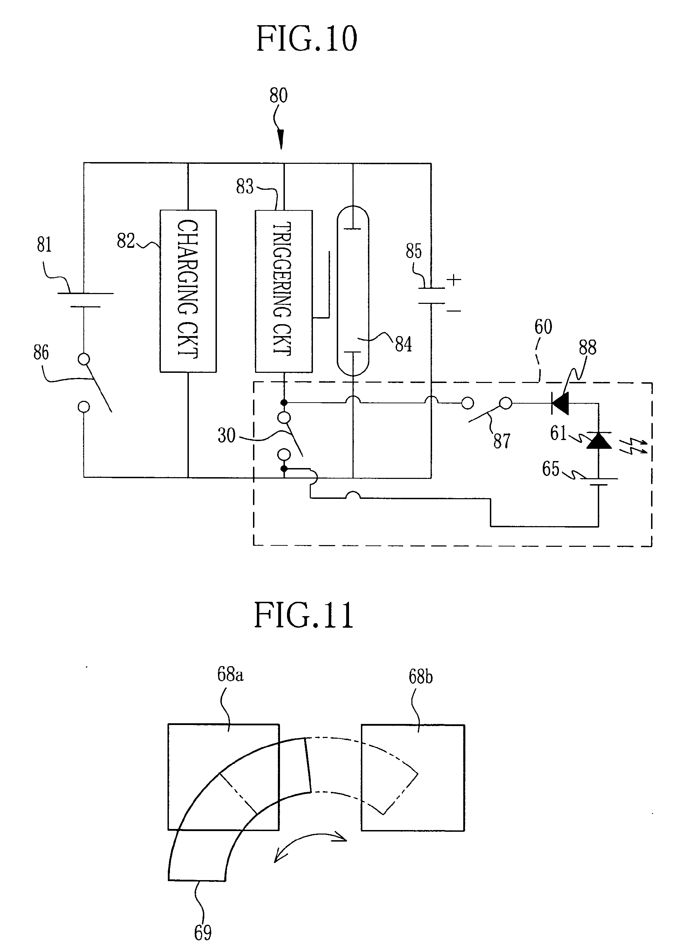

Fig.10 shows a flash circuit 80 and an LED light emission circuit 60 which are used in the flash unit 24 according to the embodiment shown in Fig.9.

As shown in Fig.10, the battery 65, the LED chip 61, an LED switch and a synch-switch 30 are connected in series to each other, constituting the light emission circuit 60. The battery 65 and the LED chip 61 are connected through wires 67 to the synch-switch 30 and the LED switch 107 which are mounted on the printed circuit board 29. Designated by 88 is a high-voltage diode for protecting the LED 61 from current discharged from a main capacitor 84 of the flash circuit 80. The LED switch 87 is turned on when the mode selection button 15 comes into the third operating position. Only while the LED switch 87 is on, the LED 91 can emit light. The LED switch 87 is constituted of a pair of contact chips 68a and 68b and a movable contact strip 69 of a substantially sector shape. The contact chips 68a and 68b are formed on the printed circuit board 29, whereas the contact strip 69 is mounted on the back side of the mode selection button 15 in opposition to the contact strip 68.

While the mode selection button 15 is in the second operating position, the contact strip 69 is in contact with only one contact chip 68a, so the contact chips 68a and 68b are not connected to each other, setting the LED 87 off. Therefore, the LED 61 is not able to emit light when the flash unit emits light.

When the mode selection button 15 is turned to the third operating position, the contact strip 69 comes into contact with both of these contact chips 68a and 68b. Thus, the LED switch 87 is turned on. Then the LED 61 emits light in synchronism with a flash light emission.

The flash circuit 81 is constituted of a charging circuit 82, a triggering circuit 83, a flash discharge tube 84, the main capacitor 85, a charge switch 86, and the synch-switch 30. When the charge switch 86 is turned on, the charging circuit 82 is activated to charge the main capacitor 85. When the synch-switch 30 is turned on while the charge switch 86 is on, the triggering circuit 83 is activated to generate a trigger signal. The trigger signal breaks isolation of the flash discharge tube 84, so the electricity charged across the main capacitor 85 is discharged at one burst, causing the flash discharge tube 84 to emit a flash of light. While the LED switch 87 is on, the light emission circuit 90 is closed upon the synch-switch 30 being turned on. Then the battery 65 supplies power to the LED 61, so the LED 61 emits light.

As the flash unit according to this embodiment, a standard model flash unit is usable. Although the flash unit of the present embodiment uses the specific LED 91, the flash circuit of the present embodiment fundamentally has the same structure as the circuit of the standard model flash unit. Only one difference is in that the printed circuit board 29 is provided with the LED switch 87 of the light emission circuit 60. The LED 61 and the battery 65, the power source of the LED light emission circuit 60, are not mounted on the printed circuit board 29. Therefore, it is unnecessary to enlarge the printed circuit board 29 in order to provide rooms for the LED 61 and the power source 65.

Since the present invention utilizes the standard model flash unit, the increase in manufacturing cost is reduced in comparison with the prior arts using a specific flash unit for the data recording.

To the present invention, not only the flash circuit shown in Fig. 11, but also such flash circuits as disclosed in Japanese Laid-open Patent Applications Nos. 11-84511 and 11-84512 are applicable. In the latter flash circuit, voltage for activating an LED is supplied from an oscillating circuit that is originally provided for charging a main capacitor. This type flash circuit makes it unnecessary to use a specific power source to the LED.

Indeed the use of a specific LED for the data recording light source increases part cost as compared to the case where the flash light is utilized for the data recording, but the cost increase is restricted by using the common flash unit.

Using common flash units in different types of lens-fitted photo film units leads to lower the recycling cost. In case where specific flash units are used for different types of lens-fitted photo film units, the flash units must be reused in the respective specific types of lens-fitted photo film units. If the different types of lens-fitted photo film units use the same flash units in common, the flash unit used once in a standard lens-fitted photo film unit having no optical data recording function, may be reused in a film unit with the optical data recording function. Therefore, it becomes unnecessary to sort used flash units according to their models, which simplifies recycling processes, including collection, inspection and repair of the used film units. Thus the recycling cost is reduced.

All of the above-described embodiments record the bit mark in synchronism with the flash light emission. But it is not always necessary to record the bit mark in synchronism with the flash light emission.

It is possible to use external light as the data recording light source, instead of the flash light or the LED. The external light may be any light entering the film film unit body from outside, including day light and artificial light such as street light and room light. In that case, the lens-fitted photo film unit is required to have a light taking window for taking external light into the film unit body. As an external light taking member, the first light guide used in the first embodiment is usable.

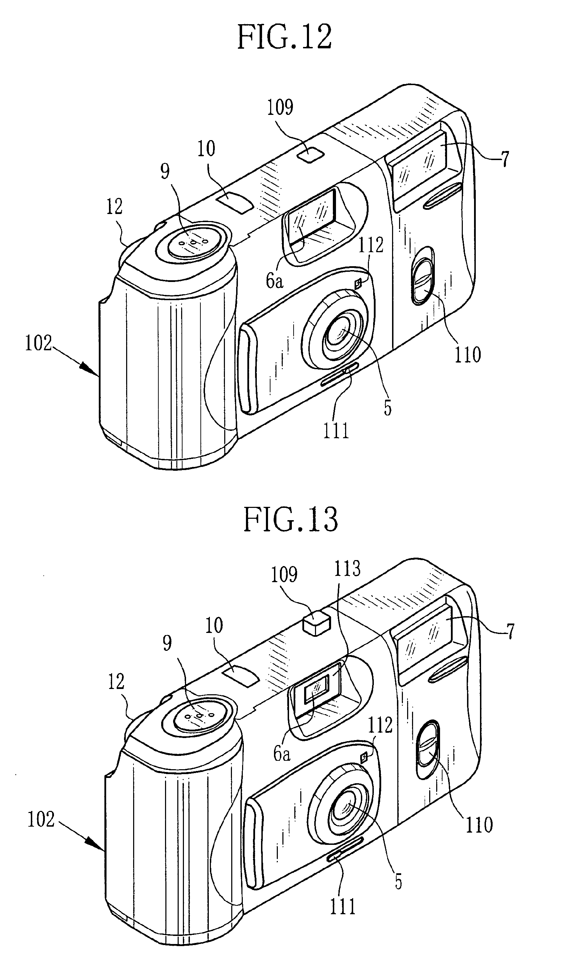

It is possible to use both the external light and the flash light as the data recording light source, like the embodiment shown in Fig.12.

A lens-fitted photo film unit 102 according to the embodiment of Fig.12 is provided on its outside with a photographic lens 5, a film winding knob 12, a shutter button 9, a viewfinder objective lens 6, an exposure counter window 10, a flash emitting portion 7, a flash-ready indicator 109, a flash charge button 110, an operation member 111 for choosing a print mode, and a light taking window 112 for taking in external light for data recording.

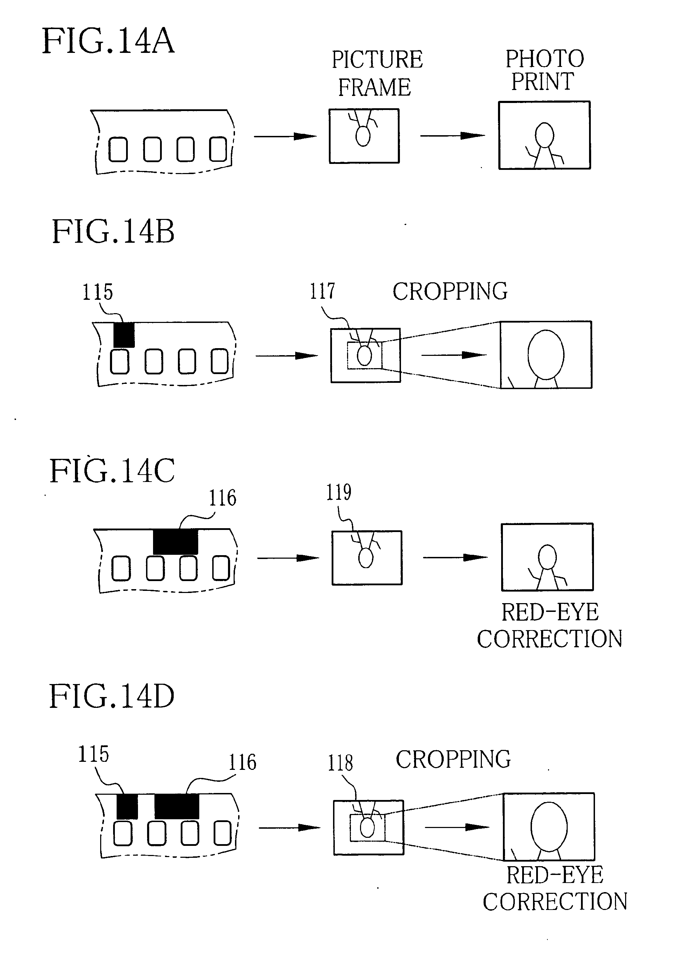

The operation member 111 is movable between a first operating position shown in Fig.12 and a second operating position shown in Fig.13. When a picture is taken while the operation member 111 is set at the second operating position, a first kind bit mark is optically recorded on photographic film at a position associated with the photographed picture frame. The first kind bit mark is regarded as data designating cropping or pseudo zooming print. In cooperation with the movement of the operation member 111 to the second operating position, a masking blade 113 is inserted into front of a viewfinder objective lens 6a, so that the masking blade 113 limits the field of view to a size corresponding to a predetermined cropping area, to preview a photographic field to be included in the cropping area before the exposure.

When the flash charge button 110 is moved from an OFF position shown in Fig .12 to an ON position shown in Fig.13, the lens-fitted photo film unit 102 is set to a flash photography mode. In this mode, a second kind bit mark is recorded optically on photographic film in association with the photographed picture frame but at a different position from the first kind bit mark. As the flash charge button 110 being moved to the ON position, the flash-ready indicator 109 pops out. The flash-ready indicator 109 is a light guide made of transparent plastics, which conducts light from an internal flash-ready lamp to outside when the flash-ready lamp turns on to emit light continuously or intermittently to indicate completion of charging for the flash photography.

As shown in Figs.14A to 14D, the first and second kind bit marks 15 and 16 are detected by photo printers. Those picture frames 117 and 118 having the first kind bit mark 115 recorded therewith are printed in a special manner that a limited area of the picture frame is printed at a larger magnification. This method may be called Cropping or Pseudo zooming. On the other hand, those picture frames 118 and 119 having the second kind bit mark 116 are subjected to red-eye correction during digital image processing in the photo printer. In the lens-fitted photo film unit 102 according to the present embodiment, the flash light is used as a data recording light source at the flash photography for recording the first or second kind bit mark 115 or 116. At the photography without flash, on the other hand, external light is used as a light source for recording the first kind bit mark 115.

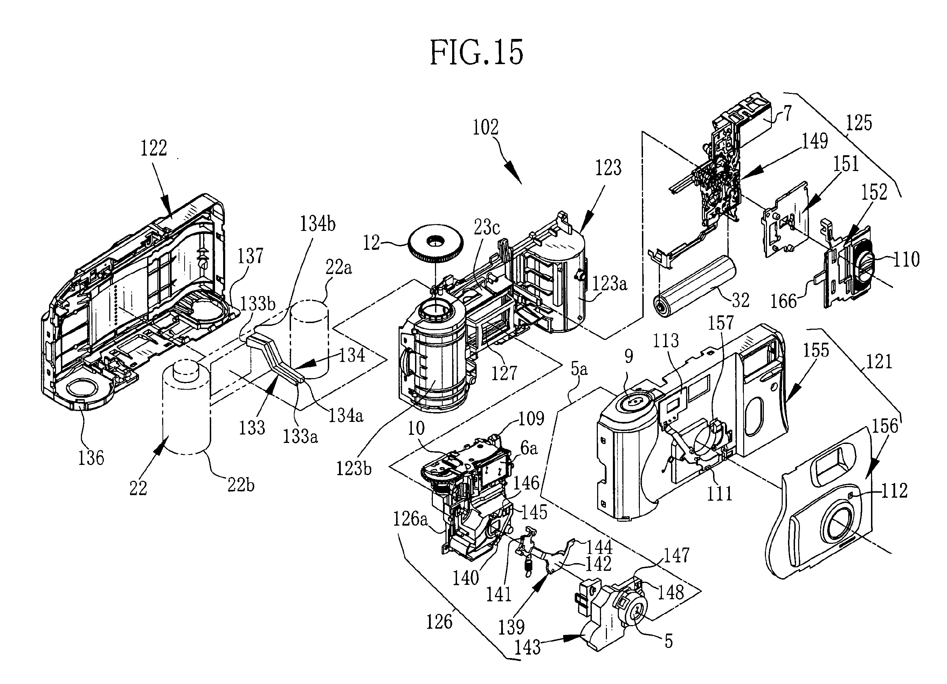

As shown in Fig. 15, an outer cover of the lens-fitted photo film unit 102 consists of a front cover unit 121 and a rear cover portion 22. Inside the outer cover, there are a main body portion 123, a photographic film cartridge 22, a flash unit 125, and an exposure unit 126. Components of an optical data recording mechanism are mounted separately in the front cover unit 121, the flash unit 125, the main body portion 123 and the exposure unit 126.

The main body portion 123 is provided with a cartridge chamber 123b on one side of a picture aperture 127, for holding a cartridge shell 22b. On the opposite side of the picture aperture 127, the main body portion 123 has a film roll chamber 123a for holding a roll of unexposed photographic film 22a that is withdrawn from the cartridge shell 22b. On top of the cartridge chamber 123b is mounted pivotally a film winding knob 12. The film winding knob 12 is interconnected with a spool of the cartridge shell 22b. The film winding knob 12 is accessible from outside, and can be rotated in a film winding direction to wind the photographic film 122a into the cartridge shell 22b after each exposure.

In front of the picture aperture 127 is mounted an exposure unit 126, so that a portion 123a of the main body portion 23 and a portion 126a of the exposure unit 26 are combined to constitute an image tunnel. The image tunnel conducts photographic light entering through the photographic lens 5 to the picture aperture 127. Inside this image tunnel, there are mounted first and second light guides 133 and 134. The first light guide 133 has a light inlet surface 133a for taking in the external light or the flash light, and a light outlet surface 133b for projecting the light to record the first kind bit mark 115 on the photographic film 22a. The second light guide 134 has a light inlet surface 134a for taking in the flash light, and a light outlet surface 134b for projecting the light to record the second kind bit mark 116 on the photographic film 22a. These light outlet surfaces 133b and 134b are placed in face of the photographic film 22a, and have different lengths from each other so as to make the first and the second bit marks 115 and 116 have different lengths from each other in a film feeding direction.

The main body portion 123 has an open backside, from where the photographic film cartridge 22 is loaded and, thereafter, the rear cover portion 122 is affixed to the backside in a light-tight fashion. The film roll chamber 123a and the cartridge chamber 123b have open bottoms. The rear cover portion 122 is provided with bottom lids 136 and 137. The one bottom lid 137 is for closing the bottom of the film roll chamber 123a, whereas the other bottom lid 136 is for closing the bottom of the cartridge chamber 123b, and is to be opened to take the photographic film cartridge 22 out of the lens-fitted photo film unit 102 after the photographic film 22a is fully exposed.

The exposure unit 126 is an assembly consisting of the photographic lens 5, a shutter mechanism, an anti-winding mechanism including a sprocket, a shutter charging mechanism, an exposure counter mechanism, a finder optical system and other photographic elements, which are incorporated into a unit. The finder optical system is an inverted Galilean finder composed of a concave objective lens 6a and a convex eyepiece.

The shutter mechanism is of a type wherein a shutter blade 139 is caused to swing in front of a shutter aperture 140 across an optical axis 5a of the taking lens 5 when one end 141 of the shutter blade 139 is kicked. The shutter aperture 140 is formed on the optical axis 5a of the taking lens 5a through a front portion of the image tunnel of the exposure unit 126. The shutter blade 139 has in the opposite end from its rotary axis to the one end 141 a photographic light blocking portion 142 for opening and closing the shutter aperture 140. The shutter blade 139 is covered by a shutter cover 143. The shutter cover 143 has a stop aperture of a fixed size on the optical axis 5a of the taking lens 5, and the photographic lens 5 is mounted in front of the fixed stop.

The shutter blade 139 also has a data recording light blocking portion 144 that protrudes diagonally upward from the photographic light blocking portion 142. The data recording light blocking portion 144 opens or closes first and second data apertures 145 and 146 at the same time. These openings 145 and 146 are formed for the optical data recording. The first data aperture 145 is placed on a first data recording light path that conducts the external light or the flash light to the light inlet surface 133a of the first light guide 133. The second data aperture 146 is placed on a second data recording light path that conducts the flash light to the light inlet surface 134a of the second light guide 134. The shutter cover 143 also has openings 147 and 148 formed on the first and second data recording light paths respectively.

The flash unit 125 is constituted of a flash circuit board 149, a power source battery 32, a guide plate 151, and a switching blade 152, and is removably mounted in between the main body portion 123 and the front cover unit 121. The flash circuit board 149 is provided with a flash circuit, a main capacitor, a synch-switch, and a flash emitting portion 7, which are assembled into one body. The flash charge button 110 is formed on the switching blade 152 that slides on the guide plate 151, so as to operate a charge switch of the flash circuit. When the charge switch is turned on, the flash unit 125 charges the main capacitor with electric power supplied from the power source battery 32. In response to the synch-switch being turned on, the flash unit 125 applies a triggering signal to a flash discharge tube, so that a high voltage charged across the main capacitor is discharged through the flash discharge tube, causing the flash discharge tube to emit light, which is projected as the flash light from the flash emitting portion 7 toward a subject.

The front cover unit 121 consists of a cover basic portion 155 and a hood portion 156, wherein a viewfinder field changing mechanism and a light source switching mechanism, which is a member of the optical data recording mechanism, are mounted in between these portions 155 and 156. The light taking window 112 is formed through the hood portion 156 in a position corresponding to the first data recording light path. The cover basic portion 155 has an opening 157 in a position corresponding to the openings 147 and 148 of the shutter cover 43, that is, on the first and the second data recording light paths, so that the external light and the flash light travel through the opening 157 to the openings 147 and 148 respectively.

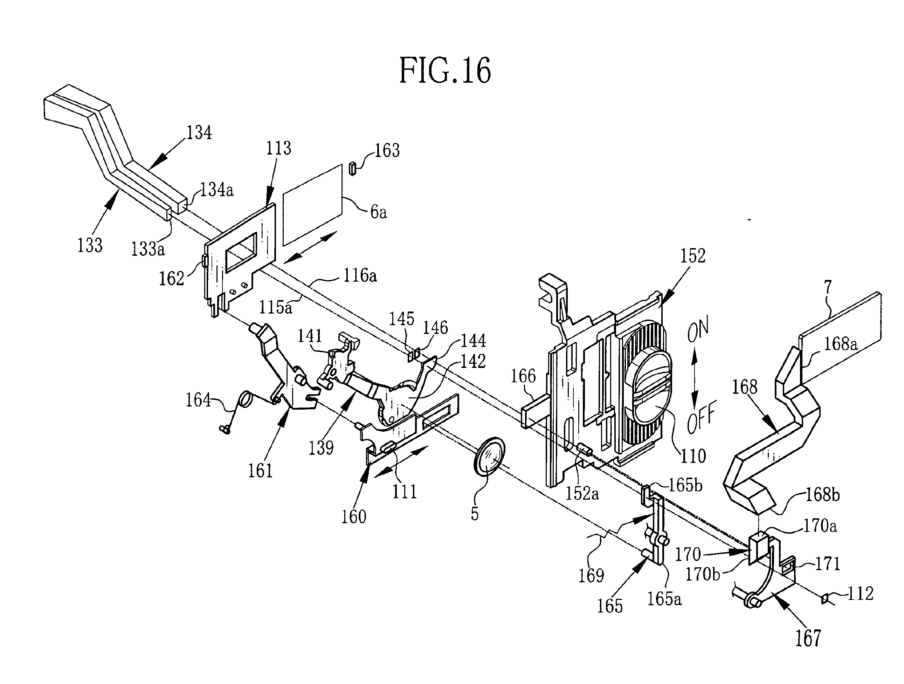

As shown in Fig. 16, the viewfinder field changing mechanism is constituted of the masking blade 113, an operation strip 160 and an interconnection lever 161.

The operation strip 160 is provided with the operation member 111, so that the operation strip 160 is moved in a horizontal direction by an external force applied to the operation member 111, thereby rotating the interconnection lever 161. As the interconnection lever 161 rotates, the masking blade 113 is moved between an inserted position that is in front of the objective lens 6a and a retracted position that is away from the objective lens 6a. Designated by 162 and 163 are stoppers formed on the cover basic portion 155. The masking blade 113 is held either at the retracted position or at the inserted position by the stoppers 162 and 163 respectively. The interconnection lever 161 is urged by a toggle spring 164 so as to push the masking blade 113 alternatively toward the stopper 162 or the stopper 163.

The light source switching mechanism for switching the light source for the optical data recording is constituted of the operation strip 160, a blocking lever 165, a blocking plate 166, a switching light guide 167 and a light guide 168 for the flash light.

While the operation member 111 is set in the first operating position, the first data aperture 145 is to be closed in order not to record the first kind bit mark 115. The blocking lever 165 is used to close the first data aperture 145. The blocking lever 165 is interconnected at its one end 165a with the operation plate 160, such that a blocking portion 165b of the blocking lever 165, which is formed on the opposite end to the one end 165a, is inserted in the first data recording light path 115a, to close the first data aperture 145, as the operation member 111 is moved to the first operating position. From this close position closing the first data aperture 145, the blocking lever 165 rotates to an open position uncovering the first data aperture 145, as the operation member 111 is moved to the second operating position. The blocking lever 165 is urged by a spring 169 toward the open position, so that the one end 165a is maintained engaged with the operation plate 160.

During the photography without flash, the second kind bit mark 116 is not to be recorded. Therefore, it is necessary to close the second data aperture 146 while the flash charge button 110 is set to the OFF position. The blocking plate 166 is used for closing the second data aperture 146. The blocking plate 166 is formed integrally with the switching blade 152, so the blocking plate 166 moves together with the switching blade 152, between a close position closing the second data aperture 146 and an open position uncovering the second data aperture 146. As the flash charge button 110 is set to the OFF position, the blocking plate 166 is moved to the close position inserted in the second data recording light path 116a. As the flash charge button 110 is set to the ON position, the blocking plate 166 is moved to the open position retracted from the second data recording light path 16a.

When the first kind bit mark 115 is to be recorded at the photography without flash, it is necessary to conduct the external light through the first data recording light path 115a. On the other hand, when the first kind bit mark 115 is to be recorded at the flash photography, it is necessary to conduct the flash light to both the first data recording light path 115a and the second data recording light path 116a. The switching light guide 167 and the flash light guide 168 are used for this purpose. The flash light guide 168 has a light inlet surface 168a placed close to the flash emitting portion 7 and a light outlet surface 168b placed close to the first and the second data recording light path 115a and 116a.

The switching light guide 167 is a rotary lever having a light guide portion 170 and an interconnecting portion 171. The interconnection portion 171 is coupled to a pin 152a of the switching blade 152. The switching light guide 167 rotates to a conductive position as the flash charge button 110 is moved to the ON position, or to a non-conductive position as the flash charge switch 11 is moved to the OFF position. In the conductive position, the light inlet surface 170a of the light guide portion 170 is in a light path from the light outlet surface 68b of the flash light guide 168, so the flash light falls on the light inlet surface 170a. Also the light outlet surface 170b of light guide portion 170 is inserted in the first and the second data recording light paths 115a and 116a, so the flash light is sent to the first and the second openings 145 and 146. In the non-conductive position, on the other hand, the light inlet surface 170a of the light guide portion 170 is put away from the light outlet surface 168b of the flash guide 168, and also the light outlet surface 170b is put away from the first and the second data recording light paths 115a and 116a.

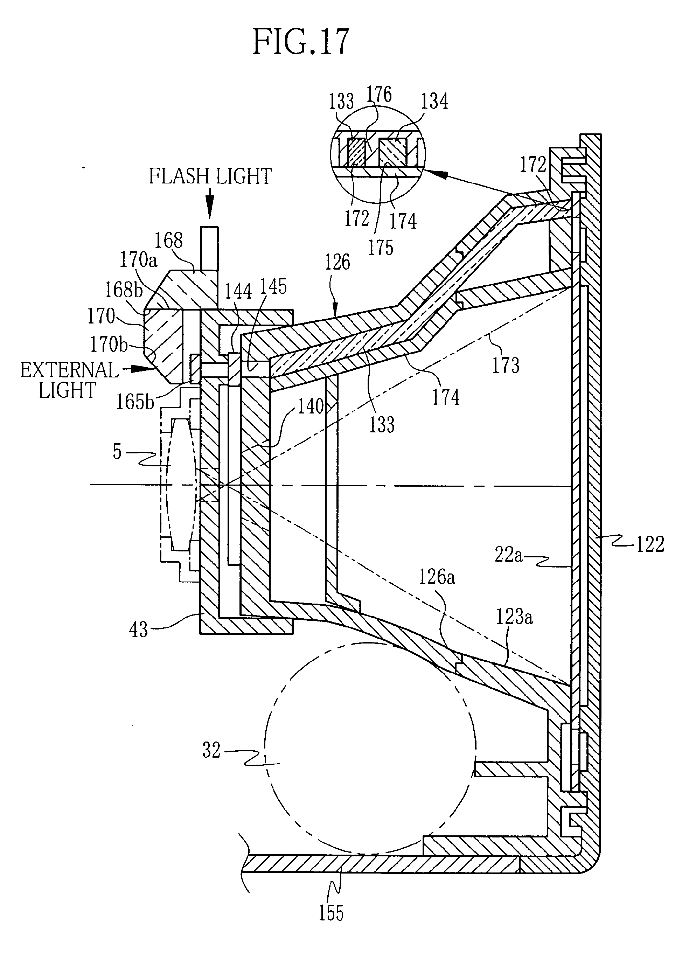

As shown in Fig.17, the first light guide 133 provides the first data recording light path 115a, and conducts the data recording light, which enters through the first data aperture 145 into the image tunnel 126a and 123a, to the first data recording aperture 172. In order to isolate the first data recording light path 115a from the photographic light path 173, a light shielding wall 174 is formed inside the image tunnel 126a and 123a along its topside, and the first light guide 133 is laid between the topside of the image tunnel 123a and 126a and the light shielding wall 174.

Though it is not shown in the drawings, the second light guide 134 forms the second data recording light path 116a, and conducts the data recording light from the second data aperture 146 to a second data recording aperture 175. The second light guide 134 is also isolated by the light shielding wall 174 from the photographic light path 173 inside the image tunnel 123a and 126a. Thus the data recording light will not leak from the first and second data recording light paths 115a and 116a to the photographic light path 173. In addition, a partition wall 176 separates the first light guide 133 from the second light guide 134.

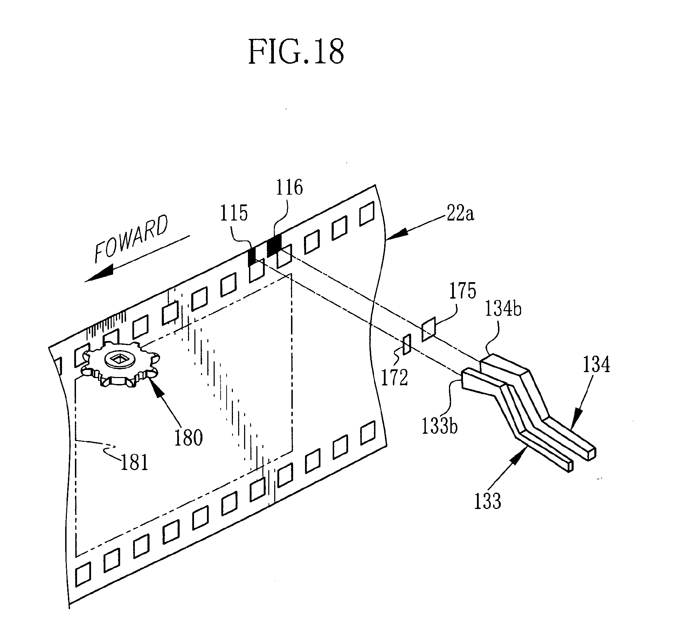

As shown in Fig. 18, the first and the second data recording aperture 172 and 175 are formed on the right hand side of the sprocket 180 as viewed from the front, so as to avoid the sprocket 180. Thus, the first or second kind bit mark 115 or 116 will be recorded on an upper marginal area outside a picture frame taking area 181 synchronously with the photography on that picture frame taking area 181. The first kind bit mark 115 is shorter than the second kind bit mark 116 with respect to the film feeding direction.

Now the operation of the above described embodiment will be briefly described.

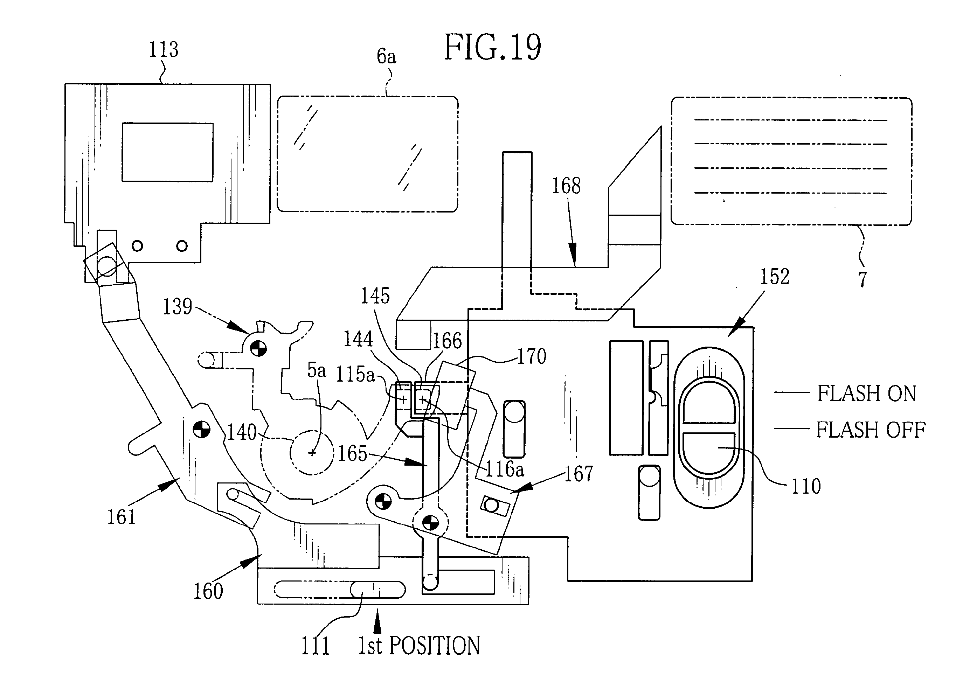

In order to take a photograph without flash and without designation to the pseudo zooming print, the operation member 111 is set to the first operating position, and the flash charge button 110 is set to the OFF position. Thereby, the masking blade 113 moves to the retracted position as shown in Fig.19, to provide a field of view that corresponds to the whole area of a picture frame.

Also the switching light guide 167 is set to the non-conductive position, and the blocking lever 165 is set to the close position, and the blocking plate 166 is set to the close position. In this position, the blocking portion 165b of the blocking lever 165 and the blocking plate 166 block the first and the second data recording light paths 115a and 116a in front of the data recording light blocking portion 144.

Before taking a picture frame, the film winding knob 12 is rotated to feed the photographic film 22a toward the cartridge shell 22b. The movement of the photographic film 22a causes the sprocket 180 to rotate, and the rotational power of the sprocket 180 is used for charging the shutter mechanism. When the anti-winding mechanism detects that the sprocket 180 rotates through an angle corresponding to one-frame film advance, the anti-winding mechanism locks the sprocket 180 and the film winding knob 12.

Thereafter when the shutter button 9 is pressed down, the shutter blade 139 is caused to swing open and then close the shutter aperture 140, so that the photographic film 22a is exposed to the photographic light. At the same time, the data recording light blocking portion 144 opens and then closes the first and the second openings 145 and 146. However, since the blocking lever 165 and the blocking plate 166 block the first and the second data recording light paths 115a and 116a respectively in front of the data recording light blocking portion 144, neither the first kind bit mark 115 nor the second kind bit mark 116 is recorded on the photographic film 22a.

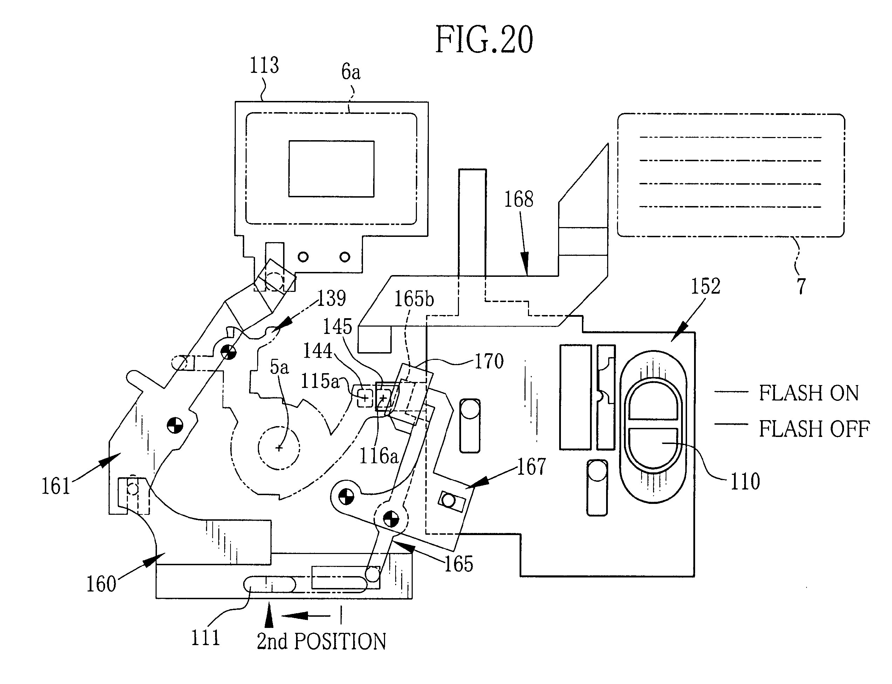

To take a picture without flash but with the designation of pseudo zooming print, the operation member 111 is set to the second operating position, and the flash charge button 110 is set to the OFF position. Then, Fig.20, the masking blade 113 is moved to the inserted position to limit the field of view so as to correspond to the cropping area of the picture frame. The switching light guide 167 is set to the non-conductive position, the blocking lever 165 is set to the open position, and the blocking plate 166 is set to the close position. In this position, the blocking plate 166 blocks the second data recording light path 116a in front of the data recording light blocking portion 144, while the first data recording light path 115a is interrupted only by the data recording light blocking portion 144 of the shutter blade 139.

Thereafter when the shutter button 9 is pressed down, the data recording light blocking portion 144 opens the first and the second openings 145 and 146 for a moment. Then the first data recording light path 115a is connected from the light taking window 112 through the photographic film 22a, so the first kind bit mark 115 is recorded in association with the photographed picture frame. Since the light guide portion 170 of the switching light guide member 167 is set away from the first data recording light path 115a, the external light entering through the light taking window 112 is fully used for the data recording. In this way, the first kind bit mark 115 is recorded adequately by use of the external light when the pseudo zooming print is designated at the photography without flash.

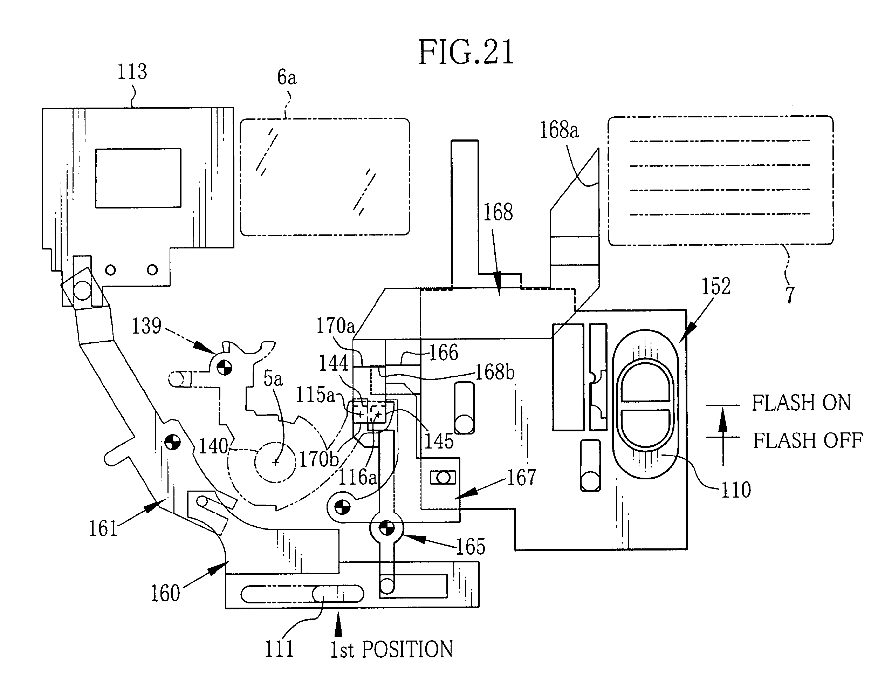

To take a picture without the designation of pseudo zooming at the flash photography, the operation member 111 is set to the first operating position, and the flash charge button 110 is set to the ON position. Then, the masking blade 113 is moved to the retracted position, as shown in Fig.21, to produce the full size view field.

Also the switching light guide 167 is set to the conductive position, the blocking lever 165 is set to the close position, and the blocking plate 166 is set to the retracted position. In this position, the light inlet surface 170a of the light guide portion 170 is matched with the light outlet surface 168b of the flash light guide 168, whereas the light outlet surface 170b of the light guide portion 170 is inserted in the first and the second data recording light paths 115a and 116a. Because the blocking portion 165b of the blocking lever 165 is inserted in the first data recording light path 15a between the data recording light blocking portion 144 and the light outlet surface 170b of the light guide portion 70, the first data recording light path 115a is interrupted by the blocking portion 165b.

When the shutter button 9 is pressed down after the flash unit 125 completes charging, the synch-switch is turned on, so the flash emitting portion 7 projects a flash of light. The flash light is partly conducted through the flash light guide 168 and the light guide portion 170, to the first and the second data recording light paths 115a and 116a. Also the data recording light blocking portion 144 opens the first and the second openings 145 and 146. Since the first data recording light path 115a is blocked, while the second data recording light path 116a is not blocked, the second kind bit mark 116 alone is recorded on the photographic film 22a in association with the photographed picture frame. In this way, at the flash photography without the designation of pseudo zooming, the second kind bit mark 116 is recorded by use of the flash light.

To take a picture with the designation of pseudo zooming print at the flash photography, the operation member 111 is set to the second operating position, and the flash charge button 110 is set to the ON position. Then, the masking blade 113 is moved to the inserted position to produce the view field corresponding to the cropping area. Also the light guide 167 is set to the conductive position, the blocking lever 165 is set to the open position, and the blocking plate 166 is set to the retracted position. In this position, the blocking portion 165b of the blocking lever 165 is set away from the first data recording light path 115a, so the first data recording light path 115a is interrupted just by the data recording light blocking portion 144 of the shutter blade 139. In this way, when a picture is photographed with flash while designating the pseudo zooming print, the first and the second kind bit marks 115 and 116 are recorded by use of the flash light in association with the photographed picture frame.

In this way, the data as to whether the pseudo zooming print is designated or not, and the data as whether the flash light was used or not are optically recorded in association with the individual picture frames.

When the last available picture frame is photographed, the exposure counter mechanism rotates its counter disc to a position indicating that there is no available exposure remaining. In cooperation with the counter disc being rotated to this position, the anti-winding mechanism is inactivated, so that it becomes possible to wind up the entire length of the photographic film 22a into the cartridge shell 22b.

After the completion of all available exposures, the lens-fitted photo film unit 102 is forwarded to a photo-lab. In the photo-lab, the bottom lid 136 is opened to remove the cartridge shell 22b containing the exposed photographic film 22a out of the cartridge chamber 123b in an axial direction of the spool. Then, the photographic film cartridge 22 is subjected to photographic processing.

After the photographic processing, the photographic film 22a is set in a photo printer. As described with respect to Figs.14A to 14D, the photo printer detects the first or second kind bit mark 115 or 116 in association with each individual picture frame, to apply different printing processes according the bit marks 115 and 116. To those picture frames 117 having the first kind bit mark 115 alone, the photo printer prints the cropping area or a center portion of the picture frame at a larger magnification. Those picture frames 119 having the second kind bit mark 116 alone are printed at a standard magnification after being subjected to the red-eye correction process. To those picture frames 118 having both the first and the second kind bit marks 115 and 116, the photo printer scans image data from the cropping area and processes these image data for the red-eye correction, before making photo prints at the larger magnification. Those picture frames having no bit mark are printed in a standard manner.

After the printing process, subsequent photo prints and the developed photographic film 22a are returned to the user. Emptied lens-fitted photo film units 102 are collected to be forwarded to a recycling factory. In the recycling process, these lens-fitted photo film units 102 are disassembled into individual parts, and the parts are sorted into reusable ones and those to be reproduced as source materials.

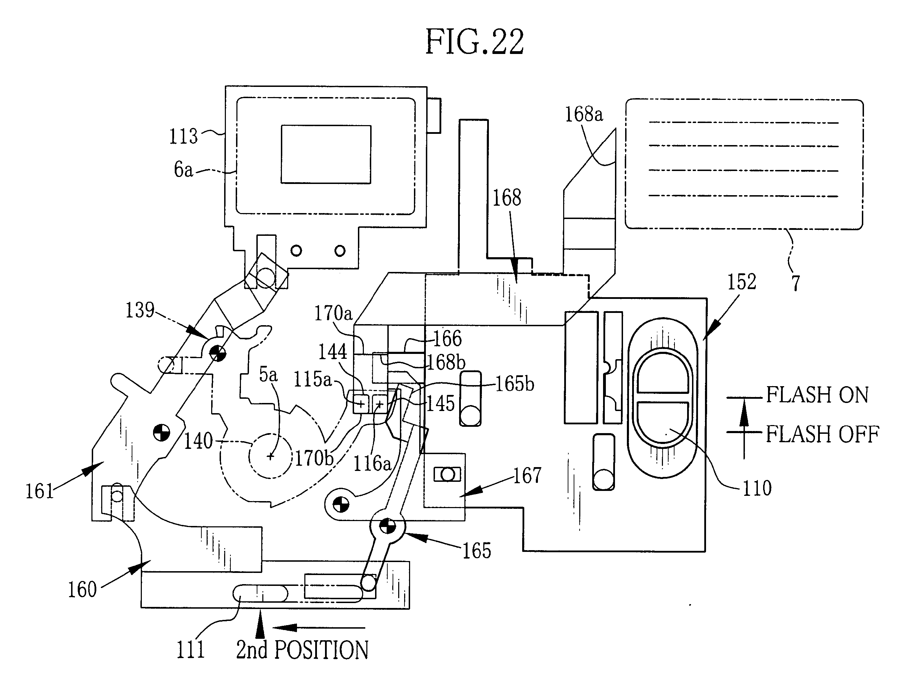

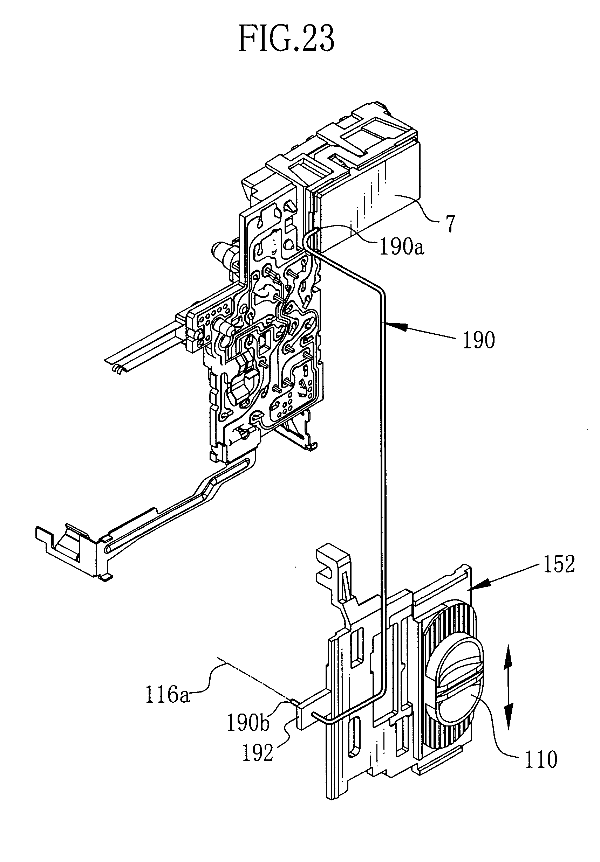

Although the embodiment described with respect to Fig.12 to Fig. 22 uses the flash light guide 168 and the switching light guide 167 in order to tap out a portion of the flash light for the data recording, the flash light conducting member may be a single member or may be constituted of more than two members. It is also possible to use an optical fiber 190 as the flash light conducting member, instead of these members 168 and 167, as shown in Fig.23. In this embodiment, a first end 190a of the optical fiber 190 is placed close to the flash emitting portion 7. A second end 190b of the optical fiber 190 is affixed to a plate 192 that protrudes from a switching blade 152, such that the end 190b is inserted in the second data recording light path 116a as the flash charge button 110 is set to the ON position. Thus, the flash light is partly conducted through the optical fiber 190 to the second data recording light path 116a at the flash photography. To conduct the flash light to the first data recording light path 115a, a second optical fiber may be disposed in parallel to the optical fiber 190, or it is possible to separate the optical fiber 190 into two branches on the side of the second end 190b.

The light guide portion 170 may be inserted in any position of the data recording light paths between the data recording light blocking portion 144 and the light taking window 112. Also the blocking portions 165b and 166 may be inserted in any position of the data recording light paths between the data recording light blocking portion 144 and the position to insert the light guide portion 170.

Although the embodiment shown in Fig. 12 to Fig. 22 can record one or both of the two kind bit marks 115 and 116, it is possible to omit the second kind bit mark. In that case, the light guide portion 170 of the switching light guide 167 is set away from a single data recording light path when the photography without flash is selected, and only one bit mark may be recorded by use of the external light.

The bit marks may serve as other kinds of data, for example, as data designating print color, print size and other factors of printing. It may also be possible to record date data, zooming ratio data of a zoom lens or the like.

The present invention has been described with respect to lens-fitted photo film units containing an ISO 135 type photo film cartridge, but the present invention is also applicable to those lens-fitted photo film units containing an IX240 type photo film cartridge.

The present invention is not only applicable to single-use handy cameras like the above lens-fitted photo film units, but also to handy cameras that allow loading photographic films repeatedly.

It is to be noted that the present invention is not to be limited to the above embodiments, and that all matter contained herein is illustrative and does not limit the scope of the present invention. Thus, obvious modifications may be made within the spirit and scope of the appended claims.

## Claims

1. An optical data recording device for recording data optically on photographic film (22a) outside individual picture frame (22c), said optical data recording device being used in a handy camera having a main body portion (23) in which a sprocket (43) of a film feeding mechanism is disposed above an image tunnel (36) that forms a photographic light path from a photographic lens (5) to an exposure opening (23c), said optical data recording device comprising:
a data recording light source (7, 64); a data recording aperture (23d, 62) formed through said main body portion (23) above said exposure opening (23c); and a device (38b, 87) for letting light from said data recording light source be projected toward said data recording aperture (23d, 62) in synchronism with a shutter release operation.

2. An optical data recording device as claimed in claim 1, wherein said data recording aperture (23d, 62) is formed in a position away from said sprocket (43).

3. An optical data recording device as claimed in claim 1, wherein said data consists of at least a bit mark (22d).

4. An optical data recording device as claimed in claim 1, wherein said data recording light source is at least one of a flash light emitting portion (7) of said camera and external light taken from outside said camera.

5. An optical data recording device as claimed in claim 1, wherein said data recording light source is a light emitting element (61) mounted on said main body portion (23) in opposition to said data recording aperture (62), said light emitting element (61) being connected to a synch-switch (30) of a flash circuit (80) of said camera via an externally operable switch (87), such that said light emitting element (61) emits light upon said synch-switch (30) being turned on while said externally operable switch (87) is on.

6. An optical data recording device as claimed in claim 1, further comprising:
a data recording light path (41, 52) disposed above said photographic light path, for conducting light from said data recording light source (7) to said data recording aperture (23d); and
a light shielding member (42, 36) for shielding said data recording light path from said photographic light path.

7. An optical data recording device as claimed in claim 6, wherein said data recording light path (41) is at least partly disposed along an internal upper portion of said image tunnel (36), wherein light from said data recording light source (7) enters through a data aperture (36b) formed through a front side of said image tunnel (36) into said data recording light path, and wherein said light shielding member (42) is disposed inside said image tunnel (36).

8. An optical data recording device as claimed in claim 6, wherein said data recording light path (52) is disposed between a top side of said image tunnel (36) and a viewfinder holding frame (51) that is mounted above said image tunnel (36), and wherein said topside of said image tunnel (36) constitutes said light shielding member.

9. A lens-fitted photo film unit having a main body portion (23) in which a sprocket (43) of a film feeding mechanism is disposed above an image tunnel (36) that forms a photographic light path, said lens-fitted photo film unit having an optical data recording device incorporated therein for recording data optically on photographic film (22a) outside individual picture frame taking area (22c), said lens-fitted photo film unit comprising:
a data recording light source (7, 61);
a data recording aperture (23d, 62) formed through said main body portion (23) above an exposure opening (23c) that defines the picture frame taking area(22c); and
a device (38b, 87) for letting light from said data recording light source be projected toward said data recording aperture (23d) in synchronism with a shutter release operation.

10. A lens-fitted photo film unit as claimed in claim 9, wherein said data recording aperture (23d, 62) is formed in a position away from said sprocket (43).

11. A lens-fitted photo film unit as claimed in claim 9, further comprising:
a data recording light path (41, 52) disposed above said photographic light path, for conducting light from said data recording light source (7) to said data recording aperture (23d); and
a light shielding member (42, 36) for shielding said data recording light path (41, 52) and said photographic light path from each other.

12. A lens-fitted photo film unit as claimed in claim 11, wherein said data recording light path (41) is at least partly disposed in an internal upper portion of said image tunnel (36), wherein light from said data recording light source (7) enters through a data aperture (36b) formed through a front side of said image tunnel (36) into said data recording light path, and wherein said light shielding member (42) is disposed inside said image tunnel (36).

13. A lens-fitted photo film unit as claimed in claim 11, wherein said data recording light path (52) is disposed between a topside of said image tunnel (36) and a viewfinder holding frame (51) that is mounted above said image tunnel (36), and wherein said topside of said image tunnel (36) constitutes said light shielding member.

14. A lens-fitted photo film unit as claimed in claim 13, wherein a second light shielding member (53) for said data recording light path (52) is formed integrally with said viewfinder holding frame (51).

15. A lens-fitted photo film unit as claimed in claim 9, wherein said data recording light source is at least one of a flash light emitting portion (7) of said camera and external light taken in from outside said camera.

16. A camera having incorporated therein a flash device (125) and an optical data recording device for recording data optically on photographic film (22a) outside individual picture frame taking area (181), said camera comprising:
a data recording aperture (172, 175) formed above an exposure opening (127) that defines the picture frame taking area (181);
a data recording light path (133, 134) for conducting external light that is taken in through an outward window (112) of said camera toward said data recording aperture (172, 175);
an externally operable member (110) for turning said flash device ON and OFF;
a light conducting device (168, 170, 190) having a light inlet portion (168, 190a) for introducing a part of flash light from a flash emitting portion (7) of said flash device (125), and a light outlet portion (170, 190b) for projecting the light, said light outlet portion being movable between a conductive position inserted in said data recording light path so as to conduct the part of flash light to said data recording light path, and a non-conductive position retracted from said data recording light path;
a device (167) for interconnecting said light outlet portion (170, 190b) to said externally operable member (110) such that said light outlet portion (170, 190b) moves to said conductive position as said flash device (125) is turned ON, or to said non-conductive position as said flash device (125) is turned OFF; and
a device (144) for letting the external light or the part of flash light be projected toward said data recording aperture (172, 175) in synchronism with a shutter release operation.

17. A camera as claimed in claim 16, wherein said externally operable member is a flash charge switch operation member (110).

18. A camera as claimed in claim 16, wherein said light conducting device comprises a plurality of light guide members (168, 170) connected in cascade along the light conducting direction, the most downstream one (170) of said light guide members constituting said movable light outlet portion.

19. A camera as claimed in claim 16, wherein said light conducting device is constituted of at least an optical fiber (190).

20. A camera as claimed in claim 16, further comprising a light blocking member (165) movable between a position blocking said data recording light path and a position retracted from said data recording light path in corporation with an externally operable switching member (111).
